(19) Europäisches Patentamt
European Patent Office
Office européen des brevets

(11) Veröffentlichungsnummer: 0 232 734
B1

(12) # EUROPÄISCHE PATENTSCHRIFT

(45) Veröffentlichungstag der Patentschrift: **11.04.90**

(51) Int. Cl.⁴: **C08K 5/15**, C08L 67/02, C08L 69/00

(21) Anmeldenummer: **87100388.5**

(22) Anmeldetag: **14.01.87**

(54) **Verwendung von 3-Benzalphthaliden als UV-Stabilisatoren für thermoplastische, aromatische Polyester, Polycarbonate und Polyestercarbonate.**

(30) Priorität: **23.01.86 DE 3601900**

(43) Veröffentlichungstag der Anmeldung: **19.08.87 Patentblatt 87/34**

(45) Bekanntmachung des Hinweises auf die Patenterteilung: **11.04.90 Patentblatt 90/15**

(84) Benannte Vertragsstaaten: **DE FR GB IT NL**

(56) Entgegenhaltungen:
**US-A-1 941 474**

**CHEMICAL ABSTRACTS, Band 86, Nr. 18, 2. Mai 1977, Seite 30, Zusammenfassung 122191j, Columbus, Ohio, US; A.M. ISLAM et al.: "Benzalphthalimidines and related compounds. Part III. 3-(p-Nitrobenzal)phthalimidines as stabilizers for PVC" & EGYPT. J. CHEM. 1974 (PUB. 1976). 17(4), 451-62icated token" 000**

(73) Patentinhaber: **BAYER AG, D-5090 Leverkusen 1 Bayerwerk(DE)**

(72) Erfinder: **Scholl, Thomas, Dr., Witzfeldstrasse 47a, D-4005 Meerbusch 1(DE)**
Erfinder: **Serini, Volker, Dr., Sebastian-Kneipp-Weg 2, D-4150 Krefeld(DE)**
Erfinder: **Rathmann, Dietrich, Dr., Alte Landstrasse 119, D-5090 Leverkusen(DE)**
Erfinder: **Savage, Ross, 111 East Street Newtownard, Co. Down, BT 23 3DE Northern Ireland(GB)**
Erfinder: **Kircher, Klaus, Dr., Alfred-Kubin-Strasse 3, D-5090 Leverkusen 1(DE)**

**EP 0 232 734 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Gegenstand der Erfindung ist die Verwendung gegebenenfalls substituierter 3-Benzalphthalide als UV-Stabilisatoren für thermoplastische aromatische Polyester, Polycarbonate und Polyestercarbonate.

Thermoplastische aromatische Polyester, Polycarbonate und Polyestercarbonate sind aufgrund ihrer hervorragenden Eigenschaften begehrte Konstruktionswerkstoffe. Auch für die Herstellung von Folien werden sie eingesetzt oder empfohlen. Bei manchen Anwendungen stört jedoch, daß diese Thermoplasten aufgrund ihrer hohen Gehalte an aromatischen Einheiten empfindlich gegen UV-Bestrahlung sind. Dies hat zur Folge, daß die Produkte bei längerer Belichtung vergilben. Die für die Verfärbung verantwortlichen unerwünschten Abbau- und Umlagerungsreaktionen führen nicht nur dazu, daß das Aussehen leidet, sondern beeinträchtigen auch die sonstigen, insbesondere die mechanischen, Eigenschaften.

Es wurde nun gefunden, daß 3-Benzalphthalide, die gegebenenfalls substituiert sind, als wirksame Stabilisatoren die geschilderten Folgen der UV-Bestrahlung bei aromatischen Polyestern, Polycarbonaten und Polyestercarbonaten weitgehend verhindern, wenn sie in Mengen von 0,01 bis 10 Gew.-%, bezogen auf Thermoplast, eingesetzt werden.

Für die Positionen der gegebenenfalls vorhandenen Substituenten des 3-Benzalphthalids gilt im Rahmen dieser Erfindung folgende Numerierung:

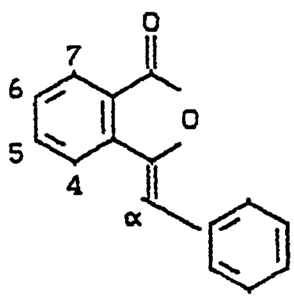

Erfindungsgemäß zu verwendende 3-Benzalphthalide entsprechen der Formel

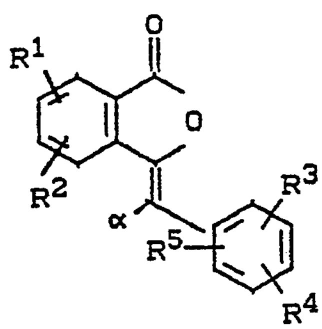

(I)

worin

$R^1$–$R^5$ und α

– R,

– OR,

– COOR,

– CN,

– $COONR_2$,

– Halogen oder

$R^1$ und $R^2$ zusammen und/oder zwei der Substituenten

$R^3$–$R^5$ zusammen

–CO–O–CO oder

–CO–NH–CO– und

R

Wasserstoff,

einen $C_1$–$C_{30}$-, vorzugsweise einen $C_1$–$C_{12}$-Kohlenwasserstoffrest, wie z.B. $C_1$–$C_6$-Alkyl, insbesondere Phenyl, $C_{6-10}$-Ar–$C_1$–$C_4$-alkyl, insbesondere Benzyl,

bedeuten.

In bevorzugten 3-Benzalphthaliden bedeuten
$R^1$–$R^5$
Wasserstoff,
Hydroxyl,
Carboxyl,
Carb-$C_1$–$C_4$-alkoxy,
Methyl,
Methoxy,
Phenyl,
Cyano,
Chlor oder
$R^1$ und $R^2$ zusammen und/oder zwei der Substituenten
$R^3$–$R^5$ zusammen
– CO–O–CO–.

Namentliche Vertreter bevorzugter 3-Benzalphthalide sind
6- und 7-Chlor-3-benzalphthalid,
4-, 4'- und 6-Methyl-3-benzalphthalid,
4'-Chlor-3-benzalphthalid,
α-Carbobutoxy-3-benzalphthalid,
4.5- und 4.7-Dimethyl-3-benzalphthalid,
6-Hydroxy-3-benzalphthalid,
4'.6-Dihydroxy-3-benzalphthalid und
3-Benzalphthalid-4'.6-dicarbonsäure.

Besonders bevorzugt sind
6-Carbethoxy-3-benzalphthalid und
3-Benzalphthalid-5.6-dicarbonsäureanhydrid.

Die bevorzugtesten Vertreter sind
3-Benzalphthalid (unsubstituiert),
5- und 6-Phenyl-3-benzalphthalid und
3-Benzalphthalid-6-carbonsäure.

3-Benzalphthalid selbst und Verfahren zu seiner Herstellung sind bekannt; z.B. Beilstein, 2. Ergänzungswerk, Bd. XVII, S. 399; Organic Synthesis Coll. Vol. II, 61 (1943); DE-OS 3 002 304. So kann man beispielsweise Phthalsäureanhydrid mit Phenylessigsäure, Phenylessigsäurealkyl- oder -phenylester oder Benzylcyan zum 3-Benzalphthalid umsetzen. Die substituierten 3-Benzalphthalide sind mindestens teilweise bekannt; sie lassen sich in analogen Reaktionen aus entsprechend substituierten Phthalsäureanhydriden und entsprechend substituierten Phenylessigsäure(derivaten) bzw. Benzylcyaniden herstellen. Die Reaktion kann man entweder in inerten Lösungsmitteln wie Aromaten (Toluol, Xylol, Mesitylen) unter Rückfluß, gegebenenfalls in Gegenwart üblicher Knoevenagel-Katalysatoren (wie Piperidin/Eisessig oder β-Alanin), evtl. am Wasserabscheider, oder ohne Lösungsmittel, vorzugsweise bei Temperaturen von 180 bis 250°C, durchführen.

Die gegebenenfalls substituierten 3-Benzalphthalide eignen sich als UV-Stabilisatoren für aromatische Polyester, aromatische Polycarbonate und aromatische Polyestercarbonate.

Bevorzugte aromatische Polyester sind solche auf Basis von Iso- und/oder Terephthalsäure, Diphenolen (vorzugsweise Bisphenol-A), Kettenabbrechern und ggf. Verzweigungsmitteln mit relativen Viskositäten von 1.2 bis 2.0, gemessen in 0,5 gew.-%-iger Lösung in Dichlormethan; zu den bevorzugten aromatischen Polyestern gehören auch thermotrope Polyester (vgl. DE-OS 3 325 703, 3 325 704, 3 325 705, 3 325 787, 3 338 623, 3 415 530, 3 419 749).

Bevorzugte aromatische Polycarbonate sind die Reaktionsprodukte von Phosgen oder einem anderen Carbonatvorläufer und mindestens einem Diphenol, vorzugsweise Bisphenol-A, 0.0.0'.0'-Tetramethylbisphenol-A oder deren halogenierten Derivaten, mit als Gewichtsmittel bestimmten Molekulargewichten von 10 000 bis 200 000, vorzugsweise von 20 000 bis 80 000.

Bevorzugte aromatische Polyestercarbonate sind solche auf Basis von Diphenolen (vorzugsweise Bisphenol-A), Iso- und/oder Terephthalsäure, Phosgen oder einem anderen Carbonatvorläufer, Kettenabbrechern und ggf. Verzweigungsmitteln mit relativen Viskositäten von 1.2 bis 2.0, insbesondere 1.2 bis 1.5 gemessen in 0.5 gew.-%-iger Lösung in Dichlormethan bei 25°C.

Die erfindungsgemäß zu verwendenden UV-Stabilisatoren werden in Mengen von vorzugsweise 1 bis 4 Gew.-% bezogen auf Thermoplast, eingesetzt.

Die Einarbeitung in die Thermoplasten erfolgt in der Regel in die Schmelze der Thermoplasten, beispielsweise auf Extrudern.

A. Herstellung von 3-Benzalphthaliden:

<u>3-Benzalphthaliden</u>

1000 g Phthalsäureanhydrid, 1100 g Phenylessigsäure und 26 g Natriumacetat wurden gemeinsam 6

Stunden lang auf 220–240°C erhitzt, wobei langsam 120 ml Wasser abdestillierten. Das verbleibende Produkt wurde aus 4 l Ethanol umkristallisiert. Fp. 101–102°C.

6-Phenyl-3-benzalphthalid

483,4 g Diphenyl-3,4-dicarbonsäure und 271,8 g Phenylessigsäure wurden zusammen mit 2,4 g Natriumacetat auf 220–240°C erhitzt, so daß 72 ml Wasser abdestillierten (ca. 8 Stunden). Anschließend wurde aus Essigester umkristallisiert. Blaßgelbe Kristalle, Fp. 187°C.

3-Benzalphthalid-α-carbonsäurebutylester

96 g Phenylessigsäurebutylester, 74 g Phthalsäurebutylester sowie 1 g Natriumacetat wurden auf ca. 220–240°C erhitzt, so daß 9 ml Wasser abgespalten wurden (ca. 14 Stunden). Nach dem Abkühlen wurden die Kristalle abgesaugt and mit Ligroin gewaschen. Fp. 77–79°C.

3-Benzalphthalid-5-carbonsäure

96 g Trimellithsäureanhydrid, 91,7 g Phenylessigsäure und 1,95 g Natriumacetat wurden 8 Stunden auf 220–240°C erhitzt, so daß 9 ml Wasser abdestillierten. Anschließend kühlte man ab, setzte ca. 500 ml Ethanol hinzu und filtrierte. Man erhielt gelbe Kristalle von Fp. 261°C.

B. Verwendetes Polyestercarbonat:

Aromatisches Polyestercarbonat aus Iso- und Terephthalsäure (1:1), Bisphenol-A und Phosgen mit Isooctyl-Endgruppen, einem molaren Ester/Carbonatverhältnis von 41.5:58.5 und einer relativen Viskosität von 1.29, gemessen wie in der Beschreibung angegeben.

C. Verwendetes Polycarbonat:

Aromatisches Bisphenol-A-Polycarbonat mit Isooctyl-Endgruppen und einer relativen Viskosität von 1,290, gemessen in Dichlormethan.

Beispiel 1

Polyestercarbonat B mit 1 Gew.-%, bezogen auf Polyestercarbonat, 3-Benzalphthalid

Beispiel 2

Polyestercarbonat B mit 1 Gew.-%, bezogen auf Polyestercarbonat, 6-Phenyl-3-benzalphthalid

Vergleich

Polyestercarbonat B mit 1 Gew.-%, bezogen auf Polyestercarbonat, 2-Hydroxy-4-methoxy-benzophenon

Bewitterung

Die Produkte nach Beispielen 1 und 2 und dem Vergleich wurden in Form von 0.2 mm dünnen Folien in einem Xenon-Weather-o-meter 72 Stunden bestrahlt. In 15minütigem Zyklus wurde jeweils 5 Minuten lang beregnet.

| Produkt | vor Belichtung | nach 72 Stunden |
|---|---|---|
| nach Beispiel 1 | farblos | farblos |
| nach Beispiel 2 | farblos | farblos |
| nach Vergleich | schwach gelb | gelb |

Spritzguß

a) Produkt nach Beispiel 1
b) Produkt analog Beispiel 1 mit 3 Gew.-% Stabilisator
c) Produkt nach Vergleich
d) Produkt analog Vergleich mit 3 Gew.-% Stabilisator

Die Produkte a) bis d) wurden bei einer Massetemperatur von 350°C zu Musterplättchen der Abmessung 40 × 60 × 4 mm verspritzt. Als Maß für die Gelbfärbung wurde die Transmission bei 420 nm gemessen.

| Produkt | Transmission bei 420 nm (gegen Luft) |
|---|---|
| a | 61,0 |
| b | 53,3 |
| c | 53,0 |
| d | 41,2 |

Man erkennt, daß die erfindungsgemäß stabilisierten Proben schon vor der Belichtung deutlich weniger vergilbt sind als die Proben des Standes der Technik.

Beispiel 3

5000 g Polycarbonat C und 25 g 3-Benzalphthalid wuden auf einem Extruder bei 300°C gemischt und bei einer Massetemperatur von 290°C zu Musterplättchen der Abmessungen 40 × 60 × 4 mm verspritzt.

Die Musterplättchen wurden einem Bewitterungstest (Xenon-Test 150) unterzogen; danach wurde die Transmission gemessen

| Bewitterungszeit | Transmission (Normlicht Art C) | |
|---|---|---|
| [Stunden] | mit 3-Benzalphthalid | ohne Benzalphthalid |
| 0 | 88.6 | 89.5 |
| 500 | 88.8 | 87.2 |
| 1000 | 87.8 | 85.4 |
| 2000 | 84.1 | 78.7 |

## Patentansprüche

1. Verwendung gegebenenfalls substituierter 3-Benzalphthalide als UV-Stabilisatoren für thermoplastische aromatische Polyester, Polycarbonate und Polyestercarbonate in Mengen von 0.01 bis 10 Gew.-%, bezogen auf Thermoplast.

2. Verwendung nach Anspruch 1 in Mengen von 1 bis 4 Gew.-%, bezogen auf Thermoplast.

3. Verwendung nach Ansprüchen 1–2, wobei die 3-Benzalphthalide der Formel

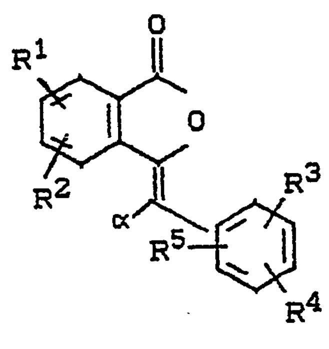

(I)

entsprechen, worin

$R^1$–$R^5$ und α

– R,
– OR,
– COOR,
– CN,
– $CONR_2$,
– Halogen oder

$R^1$ und $R^2$ zusammen und/oder zwei der Substituenten
$R^3$–$R^5$ zusammen
– CO–O–CO– oder
– CO–NH–CO– und
R
Wasserstoff oder einen $C_1$–$C_{12}$-Kohlenwasserstoffrest
bedeuten

4. Verwendung nach Anspruch 3, wobei
$R^1$–$R^5$
Wasserstoff,
Hydroxyl,
Carboxyl,
Carb-$C_1$–$C_4$-alkoxy,
Methyl,
Methoxy,
Phenyl,
Cyano,
Chlor oder
$R^1$ und $R^2$ zusammen und/oder zwei der Substituenten
$R^3$–$R^5$ zusammen
– CO–O–CO–
und R Wasserstoff, $C_1$–$C_6$-Alkyl, $C_6$–$C_{10}$-Aryl oder $C_6$–$C_{10}$-Ar–$C_1$–$C_4$-alkyl
bedeuten.

5. Verwendung nach Ansprüchen 1–4, wobei das 3-Benzalphthalid aus der Reihe 3-Benzalphthalid, 5- und 6-Phenyl-3-benzalphthalid und 3-Benzalphthalid-6-carbonsäure ausgewählt ist.

**Claims**

1. The use of optionally substituted 3-benzalphthalides as UV stabilizers for thermoplastic aromatic polyesters, polycarbonates and polyester carbonates in quantities of from 0.01 to 10% by weight, based on thermoplastic.

2. The use claimed in claim 1 in quantities of from 1 to 4% by weight, based on thermoplastic.

3. The use claimed in claims 1 and 2, the 3-benzalphthalides corresponding to the following formula

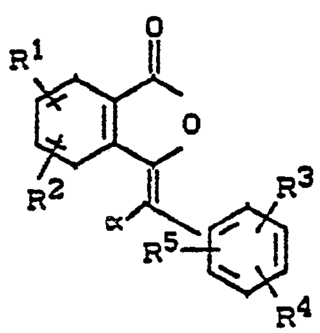

(I)

in which
$R^1$– $R^5$ and α
– R
– OR,
– COOR,
– CN,
– $CONR_2$,
– halogen or
$R^1$ and $R^2$ together and/or two of the substituents $R^3$–$R^5$ together represent
– CO–O–CO– or
– CO–NH–CO– and
R represents hydrogen or a $C_{1-12}$ hydrocarbon radical.

4. The use claimed in claim 3
$R^1$–$R^5$ representing
hydrogen,
hydroxyl,

carboxyl,
carb-$C_{1-4}$-alkoxy,
methyl,
methoxy,
phenyl,
cyano,
chlorine or
$R^1$ and $R^2$ together and/or two of the substituents $R^3$–$R^5$ together representing
– CO–O–CO–
and R representing hydrogen, $C_{1-6}$ alkyl, $C_{6-10}$ aryl or $C_{6-10}$-Ar–$C_{1-4}$-alkyl.

5. The use claimed in claims 1 to 4, the 3-benzalphthalide being selected from the series comprising 3-benzalphthalide, 5- and 6-phenyl-3-benzalphthalide and 3-benzalphthalide-6-carboxylic acid.

**Revendications**

1. Utilisation de 3-benzylidènephtalides éventuellement substitués comme stabilisants anti-UV pour les polyesters, polycarbonates et polyestercarbonates aromatiques thermoplastiques en quantités de 0,01 à 10% en poids, par rapport à la matière thermoplastique.

2. Utilisation selon la revendication 1 en quantités de 1 à 4% en poids, par rapport à la matière thermoplastique.

3. Utilisation selon les revendications 1 et 2, dans laquelle les 3-benzylidènephtalides répondent à la formule générale

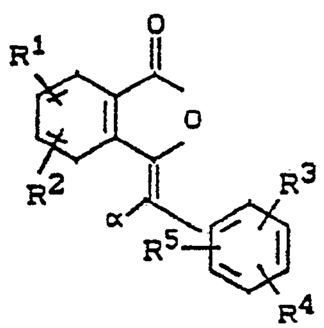

(I)

dans laquelle
$R^1$–$R^5$ et α représentent
– R,
– OR,
– COOR,
– CN,
– $CONR_2$ ou
– halogène, ou bien
$R^1$ et $R^2$ pris ensemble et/ou deux des substituants $R^3$–$R^5$ pris ensemble représentent
– CO–O–CO– ou
– CO–NH–CO– et
R représente l'hydrogène ou un reste d'hydrocarbure en $C_1$–$C_{12}$.

4. Utilisation selon la revendication 3, dans laquelle
$R^1$–$R^5$ représentent l'hydrogène ou le chlore ou un groupe hydroxyle, carboxyle, carbo-(alcoxy en $C_1$–$C_4$), méthyle, méthoxy, phényle ou cyano, ou bien
$R^1$ et $R^2$ pris ensemble et/ou deux des substituants $R^3$ – $R^5$ pris ensemble représentent
– CO–O–CO–
et R représente l'hydrogène ou un groupe alkyle en $C_1$–$C_6$, aryle en $C_6$–$C_{10}$ ou (aryl en $C_6$–$C_{10}$)-alkyle en $C_1$–$C_4$.

5. Utilisation selon les revendications 1–4, dans laquelle le 3-benzylidènephthalide est choisi dans la série du 3-benzylidènephthalide, du 5- et du 6-phényl-3-benzylidènephthalide et de l'acide 3-benzylidènephtalide-6-carboxylique.